# EUROPÄISCHE PATENTSCHRIFT

(11) **EP 0 716 246 B1**
(45) Veröffentlichungstag und Bekanntmachung des Hinweises auf die Patenterteilung: **20.09.2000**
(21) Anmeldenummer: 94119288.2
(22) Anmeldetag: 07.12.1994
(51) Int. Cl.: F16D 65/092

(54) **Bremsbelagsatz für Schwimmsattel-Scheibenbremse**
Set of brake pads for floating caliper disc brake
Jeu de patins pour frein à disque à étrier coulissant

(43) Veröffentlichungstag der Anmeldung: 12.06.1996
(73) Patentinhaber: Continental Teves AG & Co. oHG, 60488 Frankfurt (DE)
(72) Erfinder: Leidecker, Hans-Dieter, D-65931 Frankfurt/Main (DE); Musolf, Jürgen, D-60323 Frankfurt/Main (DE)

(56) Entgegenhaltungen:
- EP-A- 0 224 988
- DE-A- 4 101 599
- DE-A- 4 120 631
- DE-C- 4 318 744
- FR-A- 2 347 572
- PATENT ABSTRACTS OF JAPAN vol. 8, no. 54 (M-282) 10. März 1984 & JP-A-58 207 535 (NISSAN)
- PATENT ABSTRACTS OF JAPAN vol. 8, no. 57 (M-283) 15. März 1984 & JP-A-58 211 032 (NISSAN)

## Beschreibung

Die Erfindung betrifft einen Bremsbelagsatz für Schwimmsattel-Scheibenbremsen gemäß dem Oberbegriff des Patentanspruchs 1.

Ein gattungsgemäßer Bremsbelagsatz ist aus der DE 41 20 631 A1 bekannt. Der bekannte Bremsbelagsatz besteht aus zwei Bremsbelägen, die jeweils eine Rückenplatte aufweisen, auf deren Vorderseite ein Reibbelag und auf deren Rückseite ein Dämpfungsblech befestigt ist. Der zur Anlage am Bremskolben und zur Verwendung auf der inneren Axialseite der Scheibenbremse bestimmte Bremsbelag besitzt drei Vorsprünge seiner Rückenplatte zur Befestigung des Dämpfungsblech und einer Haltefeder. Die drei Vorsprünge sind in Umfangsrichtung ungefähr in einer Linie angeordnet. Das Dämpfungsblech weist ebensoviele Löcher zum Durchgang der Vorsprünge auf, an denen es vernietet ist. Der zur Verwendung auf der äußeren Axialseite bestimmte Bremsbelag weist zwei Vorsprünge seiner Rückenplatte auf, die jedoch in radialer Richtung übereinander angeordnet sind. Das dazugehörige Dämpfungsblech weist ebenso angeordnete Löcher zum Durchgang der Vorsprünge auf. Zur Fertigung eines aus innerem und äußerem Bremsbelag bestehenden Bremsbelagsatzes sind zwei verschiedene Rückenplatten und zwei verschiedene Dämpfungsbleche erforderlich. Man benötigt jeweils zwei Fertigungswerkzeuge zum Stanzen der vier Bauteile und eine umfangreiche Zwischenlagerhaltung. Dies wirkt sich auf die Fertigungskosten aus.

Ferner ist es aus der DE 43 18 744 C1 bekannt für eine Sschwimmsattel-Scheibenbremse einen Bremsbelagsatz mit gleichen Bremsbelägen sowie gleichen Dämpfungsblechen für die axiale Innen- und Außenseite zu verwenden. Dabei sind die Dämpfungsbleche jeweils an einem Vorsprung der Belagträgerplatte auf der dem Reibbelag abgewandten Seite mit der Belagträgerplatte vernietet. Die Befestigung der Dämpfungsbleche mit nur einer Nietung erweist sich hier als unzureichend, da das Dämpfungsblech nicht notwendigerweise flächig an der Belagträgerplatte anliegt und sich zumindeset partiell von der Belagträgerplatte lösen kann.

Aufgabe der Erfindung ist es, einen verbesserten Bremsbelagsatz anzugeben, zu dessen Herstellung möglichst geringe Fertigungskosten anfallen.

Die Lösung der Aufgabe ergibt sich aus dem kennzeichnenden Teil des Patentanspruchs 1. Im Prinzip besteht die erfindungsgemäße Lösung darin, ein einheitliches Dämpfungsblech zu schaffen, das sowohl für den inneren als auch für den äußeren Bremsbelag verwendbar ist. Dabei wird ein Dämpfungsblechwerkzeug und die damit verbundenen Kosten eingespart. Außerdem ergeben sich Einsparungen durch eine verringerte Zwischenlagerhaltung. Im einzelnen ergibt sich für einen inneren Bremsbelag eine vorteilhafte Ausgestaltungsform dadurch, daß das Dämpfungsblech in der Mitte des Bremsbelags ohnehin von dem anliegenden Bremskolben angedrückt wird. Daher genügen zur vollständigen Befestigung zwei in Umfangsrichtung seitlich beabstandet angeordnete Nietköpfe. Der äußere Bremsbelag wird bei üblichen Bauformen von Schwimmsattel-Scheibenbremsen durch Anlage an zwei in Umfangsrichtung beabstandeten Fingern des Schwimmsattels an die Bremsscheibe angedrückt. Die beiden Finger liegen an den in Umfangsrichtung äußeren Randbereichen des Bremsbelags an und drücken hier das Dämpfungsblech an die Rückenplatte an. Zur vollständigen Befestigung des Dämpfungsblechs sind daher zwei Nietköpfe vorgesehen, die in radialer Richtung im Abstand zueinander in der Mitte der Belagträgerplatte angeordnet sind.

Falls der äußere Bremsbelag zusätzlich mit einer Haltefeder zur Befestigung im hohlen Bremskolben versehen werden soll, empfiehlt sich eine Ausführungsform gemäß Anspruch 2, nach der ein zentraler Nietkopf für die Haltefeder in der Mitte der Belagträgerplatte angeordnet ist. Eine weitere vorteilhafte Maßnahme gemäß Anspruch 3 dient zur verdrehsicheren Befestigung der Haltefeder, ohne daß dazu ein weiterer Nietkopf erforderlich wäre.

Gemäß einer vorteilhaften Ausführungsform nach Anspruch 4 kann für den inneren Bremsbelag einer der radial beabstandeten, mittigen Nietköpfe bei Verwendung derselben Belagträgerplatte für den inneren und den äußeren Bremsbelag gleichzeitig zur Befestigung der Haltefeder dienen. Andererseits können auch drei Nietköpfe in der Mitte der Belagträgerplatte vorgesehen sein, die in einer Linie im Abstand zueinander angeordnet sind.

In einer Weiterbildung der Erfindung gemäß Anspruch 5 sind neben den Dämpfungsblechen auch die Belagträgerplatten der beiden Bremsbeläge gleich ausgestaltet, so daß sich die oben genannten Vorteile bezüglich der Fertigungskosten verdoppeln. Bei Verwendung der Belagträgerplatte für den äußeren Bremsbelag werden die beiden in den Randbereichen der Belagträgerplatte befindlichen Nietköpfe zur Befestigung des Dämpfungsblechs vernietet, bei Verwendung der Belagträgerplatte für den inneren Bremsbelag wird am mittleren Nietkopf die Blattfeder befestigt. Wenn nun eine universal verwendbare Belagträgerplatte mit vier oder fünf Nietköpfen beispielsweise zum Einsatz kommt, empfiehlt sich der Einfachheit halber eine Maßnahme, nach der beim inneren Bremsbelag nur die seitlichen und ggf. der zentrale Nietkopf und beim äußeren Bremsbelag nur die mittigen Nietköpfe vernietet werden. Dabei werden wiederum Fertigungskosten eingespart.

Um die bei der Fertigung der Dämpfungsbleche und der Belagträgerplatten auftretenden Fertigungstoleranzen ausgleichen zu können, empfiehlt sich eine Merkmalskombination gemäß Anspruch 6, nach der im Dämpfungsblech ovale Locher zum Durchgang der Nietköpfe vorgesehen sind. Ohne diesen Toleranzausgleich bestünde die Gefahr, daß die Dämpfungsbleche auch nach dem Vernieten der Nietköpfe nicht eben an den Belagträgerplatten anliegen.

Eine weitere vorteilhafte Maßnahme, die die Verwendung einer universellen Belagträgerplatte sowohl für den inneren als insbesondere auch für den äußeren Bremsbelag ermöglicht, ergibt sich aus der Merkmalskombination des Anspruchs 7. Um eine ebene Anlage der oben genannten Finger des Schwimmsattels an der Rückseite des äußeren Bremsbelags zu gewährleisten muß der äußere Gehäuseschenkel an seiner Innenfläche zwei Ausnehmungen aufweisen, in die die seitlichen Nietköpfe des äußeren Bremsbelags in axialer Richtung hineinragen können. Diese Ausnehmungen können beispielsweise einen runden Querschnitt haben, und dienen dann gleichzeitig als Sicherung für den äußeren Bremsbelag gegen radiales Herausfallen. Zum radialen Entfernen des äußeren Bremsbelags müßte dieser dann zuerst einige Millimeter in axialer Richtung bewegt werden, bis die Nietköpfe nicht mehr in die Ausnehmungen hineinragen. Wenn andererseits wegen des geringen axialen Einbauraums eine axiale Verschiebung des äußeren Bremsbelags bei der Montage nicht erwünscht ist, empfiehlt sich eine Ausführungsform gemäß Anspruch 8, nach der die Ausnehmungen des äußeren Gehäuseschenkels jeweils in Form einer Rinne ausgestaltet sind, die in radialer Richtung bis zum Ende der Finger des Gehäuseschenkels reicht. Die Ausnehmungen nach Anspruch 7 oder 8 werden zur Vermeidung weiterer Fertigungskosten am besten gemäß Anspruch 9 beim Gießen des Schwimmsattelgehäuses gleich mit eingeformt.

Ausführungsbeispiele der Erfindung werden nachfolgend anhand der Zeichnungen näher erläutert.

Es zeigen:
- Figur 1: eine Belagrückenplatte für einen inneren Bremsbelag;
- Figur 2: eine Belagrückenplatte für einen äußeren Bremsbelag;
- Figur 3: ein erfindungsgemäßes Dämpfungsblech;
- Figur 4: die Belagträgerplatte von Figur 2 mit aufgelegtem Dämpfungsblech von Figur 3;
- Figur 5: die Belagträgerplatte von Figur 1 mit aufgelegtem Dämpfungsblech von Figur 3;
- Figur 6: der aus der Anordnung von Figur 4 durch Vernieten entstandene fertige äußere Bremsbelag;
- Figur 7: der aus der Anordnung von Figur 5 nach Hinzufügen einer Blattfeder und durch Vernieten entstandene innere Bremsbelag;
- Figur 8: eine universell verwendbare Belagträgerplatte für eine zweite Ausführungsform der Erfindung;
- Figur 9: ein äußerer Bremsbelag, der aus der Belagträgerplatte von Figur 8 und dem Dämpfungsblech von Figur 3 besteht;
- Figur 10: ein innerer Bremsbelag, der ebenfalls aus der Belagträgerplatte von Figur 8 und dem Dämpfungsblech von Figur 3 unter Hinzufügung einer Blattfeder besteht;
- Figur 11: ein weiteres Dämpfungsblech für eine dritte Ausführungsform der Erfindung;
- Figur 12: eine weitere Belagträgerplatte für die dritte Ausführungsform der Erfindung;
- Figur 13: ein aus dem Dämpfungsblech von Figur 11 und der Belagträgerplatte von Figur 12 unter Hinzufügung einer Haltefeder zusammengesetzter innerer Bremsbelag;
- Figur 14: ein aus dem Dämpfungsblech von Figur 11 und der Belagträgerplatte von Figur 12 zusammengesetzter äußerer Bremsbelag.

Alle drei im folgenden beschriebenen Ausführungsbeispiele der Erfindung betreffen jeweils einen Bremsbelagsatz für Schwimmsattel-Scheibenbremsen, der jeweils aus zwei Bremsbelägen besteht. Ein innerer Bremsbelag 1 ist zur Anlage an einem Bremskolben des Schwimmsattels und ein äußerer Bremsbelag 2 zur Anlage an einem äußeren Gehäuseschenkel des Schwimmsattels bestimmt. Jeder Bremsbelag 1, 2 besitzt eine Belagträgerplatte, auf deren Vorderseite (in den Zeichnungen nicht dargestellt) ein Reibbelag und auf deren Rückseite ein Dämpfungsblech an durchgeprägten Nietköpfen befestigt ist.

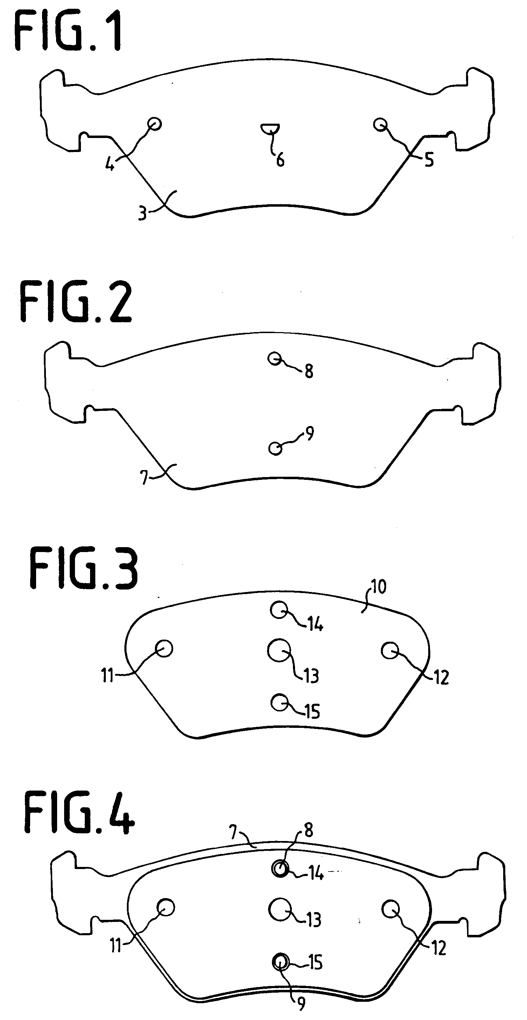

Ein erstes Ausführungsbeispiel der Erfindung ist in den Figuren 1 bis 7 dargestellt. Eine für den inneren Bremsbelag 1 bestimmte Belagträgerplatte 3 ist mit zwei in Umfangsrichtung seitlich angeordneten Nietköpfen 4, 5 und einem in der Mitte zwischen den beiden Nietköpfen 4, 5 angeordnetem Nietkopf 6 versehen. Die Nietköpfe 4, 5, 6 sind aus dem Material der Belagträgerplatte 3 durch Stempel herausgeformt und stehen aus der Plattenebene in axialer Richtung einige Millimeter hervor. Eine für den äußeren Bremsbelag 2 bestimmte Belagträgerplatte 7 ist mit zwei Nietköpfen 8, 9 versehen, die längs einer Mittellinie der Belagträgerplatte 7 in radialer Richtung beabstandet angeordnet sind. Ein Dämpfungsblech 10 ist zur Befestigung auf der Rückseite sowohl der inneren Belagträgerplatte 3 als auch der äußeren Belagträgerplatte 7 vorgesehen. Das Dämfpungsblech 10 weist drei Löcher 11, 12, 13 zum Durchgang der Nietköpfe 4, 5, 6 der inneren Belagträgerplatte 3 und zwei weitere Löcher 14, 15 zum Durchgang der Nietköpfe 8, 9 der äußeren Belagträgerplatte 7 auf. Für die Fertigstellung des äußeren Bremsbelags 2 wird das Dämpfungsblech 10 auf die Belagträgerplatte 7 aufgelegt und die beiden Nietköpfe 8, 9 durch Vertaumelung vernietet.

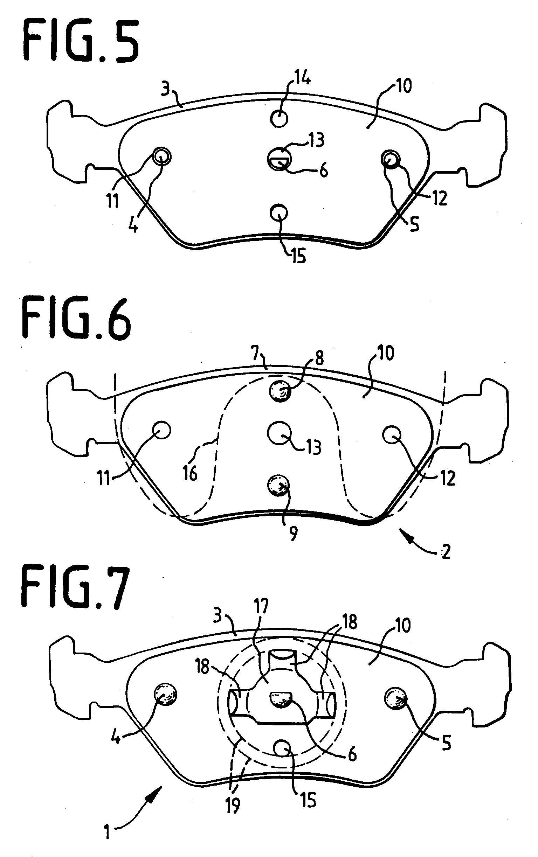

Der fertige äußere Bremsbelag 2 ist in Figur 6 dargestellt, wobei durch die Strichelung 16 die Konturen des äußeren Gehäuseschenkels des Schwimmsattels mit angedeutet sind. Man erkennt die beiden Finger des äußeren Gehäuseschenkels, die an den in Umfangsrichtung äußeren Randbereichen des Dämpfungsblechs 10 anliegen und dieses an die Belagträgerplatte 7 andrücken. In dem ausgesparten Bereich zwischen den beiden Fingern sorgen die zwei Nietköpfe 8, 9 für eine gute Anlage des Dämpfungsblechs 10 an der Belagträgerplatte 7. Die Löcher 11, 12, 13 des Dämpfungsblechs bleiben bei Verwendung am äußeren Bremsbelag 2 frei.

In Figur 7 ist der fertige innere Bremsbelag 1 dargestellt. Nach dem Auflegen des Dämpfungsblechs 10 auf die innere Belagträgerplatte 3 wird noch eine Haltefeder 17 auf den mittleren Nietkopf 6 aufgesteckt. Die Haltefeder 17 besteht aus Federblech und besitzt drei Federarme 18, die in das Innere eines hohlen Bremskolbens eingreifen, um den inneren Bremsbelag 1 am Bremskolben zu befestigen. Zum Durchgang des mittleren Nietkopfes 6 besitzt die Haltefeder 17 eine nicht gezeigte Öffnung. Diese Öffnung weist genauso wie der Nietkopf 6 einen D-förmigen Querschnitt auf. Dadurch wird die Haltefeder 17 gegen Verdrehen um die Achse des Nietkopfs 6 gesichert. Nach dem Vernieten des Nietkopfs 6 und der Nietköpfe 4, 5 ist der innere Bremsbelag 1 fertiggestellt. In der Figur 7 sind die Konturen des hohlen Bremskolbens durch die doppelte Strichelung 19 angedeutet. Der Bremskolben drückt in dem ringförmigen Bereich zwischen den Kreisen der Strichelung 19 das Dämpfungsblech 10 gegen die Belagträgerplatte 3. Die in Umfangsrichtung äußeren Randbereiche des Dämpfungsblechs 10 werden durch die Nietköpfe 4, 5 angedrückt. Die Löcher 14, 15 des Dämpfungsblechs 10 bleiben beim inneren Bremsbelag 1 frei.

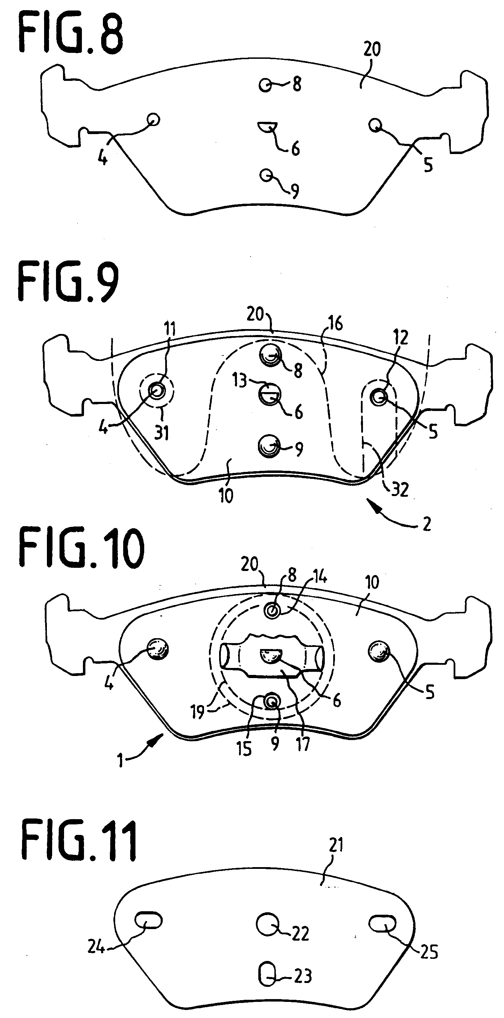

Ein zweites Ausführungsbeispiel der Erfindung ist in den Figuren 8 bis 10 dargestellt. Eine Belagträgerplatte 20 ist sowohl für den inneren Bremsbelag 1 als auch für den äußeren Bremsbelag 2 geeignet. Die Belagträgerplatte 20 besitzt daher fünf Nietköpfe 4, 5, 6, 8, 9, die im Prinzip genauso angeordnet sind wie bei den anderen Belagträgerplatten 3, 7. Die Belagträgerplatte 20 kann mit dem Dämpfungsblech 10 sowohl zu einem inneren Bremsbelag 1 als auch zu einem äußeren Bremsbelag 2 kombiniert werden. Zur Einsparung von Fertigungskosten werden für den inneren Bremsbelag 1 nur die Nietköpfe 4, 5 und nach dem Auflegen der Haltefeder 17 der Nietkopf 6 und für den inneren Bremsbelag 2 nur die Nietköpfe 8, 9 vernietet. Infolgedessen bleiben beim inneren Bremsbelag 1 die durch die Löcher 14, 15 des Dämpfungsblechs 10 ragenden Nietköpfe 8, 9 und beim äußeren Bremsbelag die durch die Löcher 11, 12, 13 ragenden Nietköpfe 4, 5, 6 unvernietet.

Zur Erfindung gehören aber auch Ausführungsformen, bei denen beispielsweise stets alle fünf Nietköpfe 4, 5, 6, 8, 9 vernietet sind. In diesem Fall unterscheidet sich der innere Bremsbelag 1 vom äußeren Bremsbelag 2 nur durch die Haltefeder 17. Aber auch Ausführungsformen bei denen beide Bremsbeläge 1, 2 eine Halterfeder 17 oder beide Bremsbeläge 1, 2 keine Haltefeder 17 und gegebenenfalls keinen Nietkopf 6 aufweisen, gehören zur Erfindung.

Eine dritte bevorzugte Ausführungsform der Erfindung ist in den Figuren 11 bis 14 dargestellt. Ein modifiziertes Dämpfungsblech 21 ist mit einem mittleren Loch 22 versehen, das einen kreisrunden Querschnitt aufweist. Auf der Mittelachse des Dämpfungsblechs 21 ist im radialen Abstand zum Loch 22 ein weiteres Loch 23 mit einem ovalen Querschnitt angeordnet. In den in Umfangsrichtung seitlichen Randbereichen des Dämpfungsblechs sind zwei weitere Löcher 24, 25 angeordnet, die ebenfalls einen ovalen Querschnitt aufweisen und im wesentlichen in einer Linie mit dem mittleren Loch 22 liegen. Die längeren Achsen der Löcher 23, 24, 25 sind jeweils auf das mittlere Loch 22 ausgerichtet. Eine modifizierte Belagträgerplatte 26 besitzt einen mittleren Nietkopf 27 mit D-förmigem Querschnitt, der zum Durchgang durch das Loch 22 des Dämpfungsblechs 21 bestimmt ist. Drei weitere Nietköpfe 28, 29, 30 besitzen jeweils kreisrunden Querschnitt und sind zum Durchgang durch die Löcher 23, 24, 25 bestimmt und entsprechend angeordnet.

Der innere Bremsbelag 1 entsteht durch Auflegen des Dämpfungsblechs 21 auf die Belagträgerplatte 26, durch Aufstecken der Haltefeder 17 und durch Vertaumeln des mittleren Nietkopfs 27 und der seitlichen Nietköpfe 29, 30. Dabei wird durch den ovalen Querschnitt der Löcher 24, 25 ein Toleranzausgleich zwischen dem Dämpfungsblech 21 und der Belagträgerplatte 26 hergestellt. Der durch das Loch 23 ragende Nietkopf 28 bleibt unvertaumelt.

Der äußere Bremsbelag 2 entsteht ebenfalls durch Auflegen des Dämpfungsblechs 21 auf die Belagträgerplatte 26, wobei anschließend lediglich die Nietköpfe 27 und 28 vertaumelt werden. Die durch die Löcher 24, 25 ragenden seitlichen Nietköpfe 29, 30 bleiben unvertaumelt.

Selbstverständlich gehören zur Erfindung auch Bremsbeläge 1, 2 bei denen jeweils alle vier Nietköpfe 27, 28, 29, 30 vertaumelt sind. Ein erfindungsgemäßer Bremsbelagsatz kann auch aus zwei gleichen Bremsbelägen 1, 2 bestehen, die entweder beide mit oder beide ohne Haltefeder 17 ausgestaltet sind.

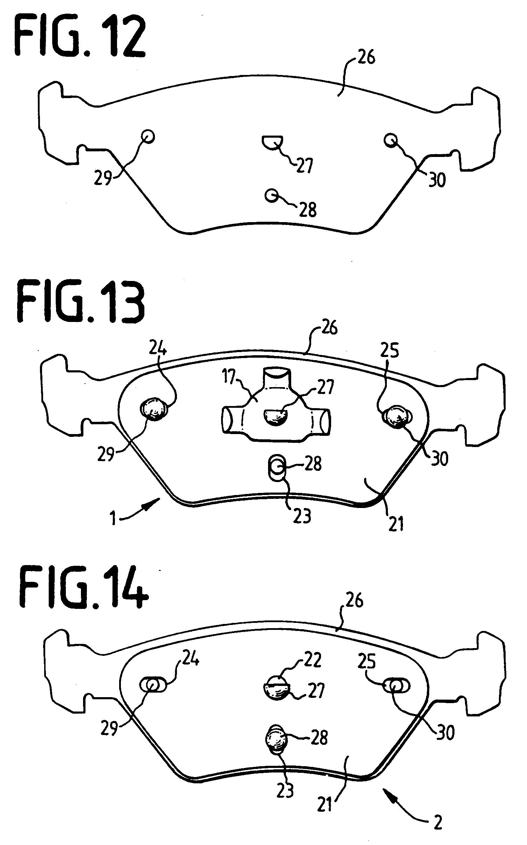

Bei der Verwendung von äußeren Bremsbelägen 2, die mit einer universell verwendbaren Belagträgerplatte 20 oder 26 (siehe Figur 9 oder Figur 14) versehen sind, muß dafür Sorge getragen werden, daß die seitlichen Nietköpfe 4, 5 bzw. 29, 30, die axial über die Plattenebene der Belagträgerplatte 20 bzw. 26 herausragen, eine ebene Anlage der Belagträgerplatte 20 bzw. 26 am äußeren Gehäuseschenkel des Schwimmsattels gewährleisten. Ein zur Verwendung mit dem genannten erfindungsgemäß ausgestalteten äußeren Bremsbelag 2 geeigneter Schwimmsattel muß in besonderer Weise für diese Verwendung ausgestaltet sein.

Eine erfindungsgemäße Maßnahme besteht darin, im äußeren Schenkel des Schwimmsattels an der Stelle der Nietköpfe 4, 5 bzw. 29, 30 Ausnehmungen vorzusehen, in die die Nietköpfe 4, 5 bzw. 29, 30 axial hineinragen können. In einer ersten Ausführungsform, die in Figur 9 durch die Strichelung 31 angedeutet ist, weisen die Ausnehmungen einen kreisförmigen Querschnitt auf. In einer zweiten Ausführungsform, die in Figur 9 durch die Strichelung 32 angedeutet ist, sind die Ausnehmungen in Form einer Rinne ausgebildet, die sich vom Ort der Nietköpfe 4, 5 bzw. 29, 30 bis zum Ende des äußeren Gehäuseschenkels in radialer Richtung erstrecken.

## Patentansprüche

1. Bremsbelagsatz für Schwimmsattel-Scheibenbremsen, mit zumindest einem für die innere Axialseite eines Schwimmsattels zur Anlage an einem Bremskolben bestimmten Bremsbelag (1) und zumindest einem Bremsbelag (2) für die äußere Axialseite, wobei jeder Bremsbelag (1, 2) eine mit einem Reibbelag versehene Belagträgerplatte (3, 7, 20, 26) aufweist, auf deren Rückseite an durchgeprägten Nietköpfen (4, 5, 6, 8, 9, 27, 28, 29, 30) ein Dämpfungsblech (10, 21) befestigt ist, wobei beide Bremsbeläge (1, 2) gleiche Dämpfungsbleche (10, 21) aufweisen, dadurch **gekennzeichnet**, daß die Dämpfungsbleche jeweils zumindest Löcher (11, 12, 13 bzw. 22, 24, 25) zum Durchgang der Nietköpfe (4, 5, 6 bzw. 27, 29, 30) der inneren Belagträgerplatte (3) als auch Löcher (14, 15 bzw. 22, 23) zum Durchgang der Nietköpfe (8, 9 bzw. 27, 28) der äußeren Belagträgerplatte (7) aufweisen, wobei die axial innere Belagträgerplatte (3) zwei in Umfangsrichtung beabstandete sowie in seitlichen Randbereichen der Belagträgerplatte (3) angeordnete seitliche Nietköpfe (4, 5, 29, 30) aufweist und die axial äußere Belagträgerplatte (7) zwei im wesentlichen längs einer Symmetrielinie der Belagträgerplatte (7) in radialer Richtung beabstandet angeordnete mittige Nietköpfe (8, 9) aufweist.

2. Bremsbelagsatz nach Anspruch 1, dadurch **gekennzeichnet**, daß ein zentraler Nietkopf (6, 27) im wesentlichen auf der Verbindungslinie der beiden seitlichen Nietköpfe (4, 5 bzw. 29, 30) in der Mitte zumindest der inneren Belagträgerplatte (3, 20, 26) angeordnet ist.

3. Bremsbelagsatz nach Anspruch 2, dadurch **gekennzeichnet**, daß der für die Befestigung einer Haltefeder (17) an dem inneren, kolbenseitigen Bremsbelag (1) vorgesehene zentrale Nietkopf (6, 27) einen D-förmigen Querschnitt als Verdrehsicherung aufweist.

4. Bremsbelagsatz nach Anspruch 2 oder 3, dadurch **gekennzeichnet**, daß der zentrale Nietkopf (6, 27) einen der beiden mittigen Nietköpfe (8, 9 bzw. 27, 28) ausbildet.

5. Bremsbelagsatz nach einem der vorhergehenden Ansprüche, dadurch **gekennzeichnet**, daß der innere Bremsbelag (1) und der äußere Bremsbelag (2) aus gleichen Belagträgerplatten (20, 26) mit Nietköpfen (4, 5, 6, bzw. 27, 29, 30) und gleichen Dämpfungsblechen (10, 21) mit Löchern (11, 12, 13 bzw. 22, 24, 25) zum Durchgang der entsprechenden Nietköpfe (4, 5, 6 bzw. 27, 29, 30) zusammengesetzt sind, wobei die äußeren und inneren Belagträgerplatten (20, 26) insbesondere gleichviele Nietköpfe (4, 5, 6, 8, 9 bzw. 27, 28, 29, 30) in derselben Anordnung aufweisen, und daß beim inneren Bremsbelag (1) nur die seitlichen Nietköpfe (4, 5 bzw. 29, 30) und gegebenenfalls der zentrale Nietkopf (6 bzw. 27) und daß beim äußeren Bremsbelag (2) nur die mittigen Nietköpfe (8, 9 bzw. 27, 28) vorzugsweise durch Taumelnietung vernietet sind.

6. Bremsbelagsatz nach einem der vorhergehenden Ansprüche, dadurch **gekennzeichnet**, daß die mittigen Nietköpfe (8, 9 bzw. 28) und die seitlichen Nietköpfe (4, 5 bzw. 29, 30) jeweils einen kreisförmigen Querschnitt und die zugehörigen Löcher (23, 24, 25) des Dämpfungsblechs (21) zum Toleranzausgleich jeweils einen ovalen oder länglichen Querschnitt aufweisen, wobei die längeren Achsen der Löcher (23, 24, 25) zu einem mittleren Loch (22) hin bzw. zur Mitte des Dämpfungsblechs (21) hin ausgerichtet sind.

7. Schwimmsattel-Scheibenbremse mit Bremsbelagsatz nach einem der Ansprüche 5 oder 6, dadurch **gekennzeichnet**, daß ein axial äußerer, auf der dem Bremskolben abgewandten Seite des Schwimmsattels angeordneter Gehäuseschenkel an den in Umfangsrichtung äußeren Randbereichen seiner am Bremsbelag (2) anliegenden Innenfläche zwei Ausnehmungen aufweist, in die die seitlichen Nietköpfe (4, 5, 29, 30) des äußeren Bremsbelags (2) hineinragen.

8. Schwimmsattel-Scheibenbremse nach Anspruch 7, dadurch **gekennzeichnet**, daß sich die Ausnebmungen jeweils in Form einer Rinne bis zum radial inneren Ende des axial äußeren Gehäuseschenkels erstrecken.

9. Schwimmsattel-Scheibenbremse nach Anspruch 7 oder 8, dadurch **gekennzeichnet**, daß die Ausnehmungen beim Gießen des Schwimmsattels mit eingeformt werden.

## Claims

1. Set of brake pads for floating-caliper disc brakes which includes at least one brake pad (1) that is intended for the inner axial side of a floating caliper for abutment on a brake piston and at least one brake pad (2) for the external axial side, with each brake pad (1, 2) including a pad carrier plate (3, 7, 20, 26) provided with a friction lining and having on its back side embossed rivet heads (4, 5, 6, 8, 9, 27, 28, 29, 30) to which a damping sheet (10, 21) is attached, with both brake pads (1, 2) having equal damping sheets (10, 21),
**characterized** in that the damping sheets have at least holes (11, 12, 13 or 22, 24, 25) for the passage of the rivet heads (4, 5, 6 or 27, 29, 30) of the inner pad carrier plate (3) and holes (14, 15 or 22, 23) for the passage of the rivet heads (8, 9 or 27, 28) of the outer pad carrier plate (7), wherein the axially inner pad carrier plate (3) includes lateral rivet heads (4, 5, 29, 30) which are spaced in a circumferential direction and arranged in lateral fringe areas of the pad carrier plate (3), and the axially outer pad carrier plate (7) includes two centric rivet heads (8, 9) which are arranged generally along a line of symmetry of the pad carrier plate (7) spaced from each other in a radial direction.

2. Set of brake pads as claimed in claim 1,
**characterized** in that a central rivet head (6, 7) is arranged generally on the connecting line of the two lateral rivet heads (4, 5 or 29, 30) in the middle of at least the inner pad carrier plate (3, 20, 26).

3. Set of brake pads as claimed in claim 2,
**characterized** in that the central rivet head (6, 27) which is provided for attaching a retaining spring (17) on the inboard brake pad (1) close to the piston has a D-shaped cross-section as a rotation-preventing mechanism.

4. Set of brake pads as claimed in claim 2 or 3,
**characterized** in that the central rivet head (6, 27) forms one of the two centric rivet heads (8, 9 or 27, 28).

5. Set of brake pads as claimed in any one of the preceding claims,
**characterized** in that the inboard brake pad (1) and the outboard brake pad (2) are composed of equal pad carrier plates (20, 26) with rivet heads (4, 5, 6 or 27, 29, 30) and equal damping sheets (10, 21) with holes (11, 12, 13 or 22, 24, 25) for the passage of the corresponding rivet heads (4, 5, 6 or 27, 29, 30), wherein the outer and inner pad carrier plates (20, 26) especially have the same number of rivet heads (4, 5, 6, 8, 9 or 27, 28, 29, 30) in the same arrangement, and in that in the inboard brake pad (1) only the lateral rivet heads (4, 5 or 29, 30) and, optionally, the central rivet head (6 or 27) and in the outboard brake pad (2) only the centric rivet heads (8, 9 or 27, 28) are riveted, preferably by wobble-riveting.

6. Set of brake pads as claimed in any one of the preceding claims,
**characterized** in that the centric rivet heads (8, 9 or 28) and the lateral rivet heads (4, 5 or 29, 30) have a circular cross-section and the associated holes (23, 24, 25) of the damping sheet (21) have an oval or elongated cross-section for tolerance compensation, with the longer axes of the holes (23, 24, 25) being aligned towards a central hole (22) respectively towards the middle of the damping sheet (21).

7. Floating-caliper disc brake with a set of brake pads as claimed in any one of claims 5 to 6,
**characterized** in that an axially external housing leg which is arranged on the side of the floating caliper remote from the brake piston includes two recesses on the circumferentially outer fringe areas of its inner surface that abuts on the brake pad (2), with the lateral rivet heads (4, 5, 29, 30) of the outboard brake pad (2) projecting into the said recesses.

8. Floating-caliper disc brake as claimed in claim 7,
**characterized** in that the recesses extend in the shape of a groove until the radially inner end of the axially external housing leg.

9. Floating-caliper disc brake as claimed in claim 7 or 8, **characterized** in that the recesses are shaped during the molding process of the floating caliper.

## Revendications

1. Jeu de plaquettes de frein pour freins à disque à étrier flottant, comportant au moins une plaquette de frein (1) pour le côté axial intérieur d'un étrier flottant, à appliquer contre un piston de frein, et au moins une plaquette de frein (2) pour le côté axial extérieur, chaque plaquette de frein (1, 2) possédant un patin porte-garniture (3, 7, 20, 26), qui porte une garniture de friction et sur le côté arrière duquel une tôle d'amortissement (10, 21) est fixée par des têtes de rivet traversantes (4, 5, 6, 8, 9, 27, 28, 29, 30), les deux plaquettes de frein (1, 2) possédant des tôles d'amortissement (10, 21) identiques, **caractérisé** en ce que les tôles d'amortissement possèdent respectivement au moins des trous (11, 12, 13 ou 22, 24, 25) pour le passage des têtes de rivet (4, 5, 6 ou 27, 29, 30) du patin porte-garniture intérieur (3) ainsi que des trous (14, 15 ou 22, 23) pour le passage des têtes de rivet (8, 9 ou 27, 28) du patin porte-garniture extérieur (7), le patin porte-garniture axialement intérieur (3) possédant deux têtes de rivet latérales (4, 5, 29, 30), distantes en direction circonférentielle et disposées dans des régions de bords latérales du patin porte-garniture (3), et le patin porte-garniture axialement extérieur (7) possédant deux têtes de rivet médianes (8, 9), disposées sensiblement le long d'une ligne de symétrie du patin porte-garniture (7) en étant distantes en direction radiale.

2. Jeu de plaquettes de frein selon la revendication 1, **caractérisé** en ce qu'une tête de rivet centrale (6, 27) est disposée sensiblement sur la ligne de jonction des deux têtes de rivet latérales (4, 5 ou 29, 30), au milieu au moins du patin porte-garniture intérieur (3, 20, 26).

3. Jeu de plaquettes de frein selon la revendication 2, **caractérisé** en ce que la tête de rivet centrale (6, 27), prévue pour la fixation d'un ressort de retenue (17) sur la plaquette de frein (1) intérieure, côté piston, possède une section en forme de D comme moyen de blocage en rotation.

4. Jeu de plaquettes de frein selon la revendication 2 ou 3, **caractérisé** en ce que la tête de rivet centrale (6, 27) constitue une des deux têtes de rivet médianes (8, 9 ou 27, 28).

5. Jeu de plaquettes de frein selon l'une quelconque des revendications précédentes, **caractérisé** en ce que la plaquette de frein intérieure (1) et la plaquette de frein extérieure (2) sont composées des mêmes patins porte-garniture (20, 26) pourvus de têtes de rivet (4, 5, 6 ou 27, 29, 30) et des mêmes tôles d'amortissement (10, 21) pourvues de trous (11, 12, 13 ou 22, 24, 25) pour le passage des têtes de rivet correspondantes (4, 5, 6 ou 27, 29, 30), les patins porte-garniture (20, 26) extérieurs et intérieurs possédant notamment un nombre identique de têtes de rivet (4, 5, 6, 8, 9 ou 27, 28, 29, 30), dans la même disposition, et en ce que, pour la plaquette de frein intérieure (1), seules les têtes de rivet latérales (4, 5 ou 29, 30) et le cas échéant la tête de rivet centrale (6 ou 27) sont rivetées, tandis que, pour la plaquette de frein extérieure (2), seules les têtes de rivet médianes (8, 9 ou 27, 28) sont rivetées, de préférence par fluage radial.

6. Jeu de plaquettes de frein selon l'une quelconque des revendications précédentes, **caractérisé** en ce que les têtes de rivet médianes (8, 9 ou 28) et les têtes de rivet latérales (4, 5 ou 29, 30) possèdent respectivement une section circulaire, et les trous correspondants (23, 24, 25) de la tôle d'amortissement (21) possèdent respectivement, pour la compensation des tolérances, une section ovale ou oblongue, les axes longitudinaux des trous (23, 24, 25) étant dirigés vers un trou médian (22) ou encore vers le milieu de la tôle d'amortissement (21).

7. Frein à disque à étrier flottant équipé d'un jeu de plaquettes de frein selon la revendication 5 ou 6, **caractérisé** en ce qu'une branche de carter axialement extérieure, disposée sur le côté de l'étrier flottant qui est opposé au piston de frein, possède, sur les régions de bords circonférentiellement extérieures de sa face intérieure s'appliquant contre la plaquette de frein (2), deux évidements dans lesquels s'enfoncent les têtes de rivet latérales (4, 5, 29, 30) de la plaquette de frein extérieure (2).

8. Frein à disque à étrier flottant selon la revendication 7, **caractérisé** en ce que les évidements s'étendent respectivement sous la forme d'une rigole jusqu'à l'extrémité radialement intérieure de la branche de carter axialement extérieure.

9. Frein à disque à étrier flouant selon la revendication 7 ou 8, **caractérisé** en ce que les évidements sont conjointement formés lors du moulage de l'étrier flottant.
